# EUROPÄISCHE PATENTSCHRIFT

(11) **EP 3 142 136 B1**
(45) Veröffentlichungstag und Bekanntmachung des Hinweises auf die Patenterteilung: **18.07.2018**
(21) Anmeldenummer: 15184905.6
(22) Anmeldetag: 11.09.2015
(51) Int. Cl.: H01H 47/00, H01H 71/04

(54) **STEUERUNGSVORRICHTUNG ZUM STEUERN EINES SCHALTELEMENTS**
CONTROL DEVICE FOR CONTROLLING A SWITCHING ELEMENT
DISPOSITIF DE COMMANDE D'UN ELEMENT DE COMMUTATION

(43) Veröffentlichungstag der Anmeldung: 15.03.2017
(73) Patentinhaber: SICK AG, 79183 Waldkirch (DE)
(72) Erfinder: Weidenmüller, Jonas, 79100 Freiburg (DE); Henneberger, Stephan, 79108 Freiburg (DE); Behre, Frederik, 79365 Rheinhausen (DE); Dold, Franz, 78120 Furtwangen (DE)

(56) Entgegenhaltungen:
- EP-A1- 0 193 732
- WO-A1-2005/104155
- DE-A1-102011 100 305
- Siemens: "SIPROTEC Digitaler Oberleitungsschutz für AC- Bahnstromversorgung 7ST6" In: "SIPROTEC Digitaler Oberleitungsschutz für AC- Bahnstromversorgung 7ST6", 26. April 2010 (2010-04-26), XP055251682, * Kapitel 2.15 *

## Beschreibung

Die Erfindung betrifft eine Steuerungsvorrichtung zum Steuern eines Schaltelements, vorzugsweise eines mechanischen Relais, gemäß dem Anspruch 1.

In der heutigen Industrie werden Schaltelemente, wie beispielsweise mechanische Relais, in zahlreichen Anwendungen eingesetzt, um über die Schaltelemente angeschlossene elektrische Geräte zu steuern. Die vorzugsweise mechanischen Schaltelemente haben dabei eine begrenzte Anzahl an möglichen Schaltzyklen, die im Vergleich zu nicht mechanischen Schaltern, wie z.B. Transistoren, vergleichsweise niedrig sind.

Ausschlaggebend hierbei ist die Lebensdauer der Schaltkontakte der Schaltelemente, die maßgeblich von der Belastung abhängt.

Da die Schaltelemente in der Regel das schwächste Glied im Verbund eines Schaltgeräts sind, ist die erwartete Lebensdauer unter gegebenen Belastungen von besonderem Interesse, um Wartungszyklen für eine Anlage zu planen oder eine Aussage über die Dauer des fehlerlosen Betriebs zu machen. Eine solche Möglichkeit wäre auch für einfache Schaltgeräte, wie z.B. Relaismodule, interessant, die keine Anbindung an eine intelligente Logik, wie z.B. eine übergeordnete speicherprogrammierbare Steuerung SPS, besitzen, wodurch diese Funktion ausgelagert werden könnte.

Die bekannten (Sicherheits-) Relaismodule erkennen ein Versagen des Relais, wie z.B. Kontaktverschweißen, und sperren den Wiederanlauf. Das Relaismodul muss anschließend ausgetauscht werden. Der Anwender wird nicht durch das Gerät auf ein (baldiges) Erreichen der erwarteten Schaltzyklen hingewiesen. Er wird erst über den Ausfall informiert. Alternativ muss er eigene Vorkehrungen treffen.

Diese Vorkehrungen bestehen darin, dass der Anwender einerseits die Anzahl der Schaltzyklen mittels externer Logik zählt und abschätzt, ab wann es sich lohnt, das Relais auszutauschen. Andererseits ermittelt der Anwender statistisch, wann das Relais sich dem Ende seiner Lebensdauer nähert und wechselt das Relais davor aus. Dabei können jedoch "intakte" bzw. "gute" Relais ausgetauscht werden. Eine dritte Möglichkeit besteht darin, dass der Anwender bis zum Defekt des Relais wartet, um es dann auszutauschen. Hierdurch entsteht jedoch Stillstand der Anlage, der Produktionsausfallkosten nach sich zieht.

Daraus ergeben sich Mehrkosten bei der Wartung des Relais bzw. beim Einsatz von mechanischen Schaltelementen.

EP 0 193 732 A1 offenbart eine Überwachungs- und Kontrolleinrichtung für Schaltgeräte mit den Merkmalen des Oberbegriffs des Anspruchs 1, wobei sämtliche verschleißrelevante Ereignisse des Schaltgeräts durch unterschiedlichste Sensoren erfasst werden. Hierbei werden fiktive Schaltzyklen aus Informationen der Sensoren bestimmt und die noch vorhandenen Schaltzyklen durch Vergleich und Extrapolation auf eine Verschleißgrenze ermittelt, so dass eine Lebenserwartung des Schaltgeräts während dem Betrieb dynamisch angepasst und dem Anwender angezeigt wird.

WO 2005/104155 A1 offenbart ein Verfahren zum Ermitteln eines eine Abnutzung von Schaltkontakten eines Leistungsschalters angebenden Restschaltspiel-Wertes. Hierbei wird zum Zeitpunkt des Öffnens der Schaltkontakte des Leistungsschalters mittels eines Stromwandlers ein Ausschaltstrom-Messwert gemessen. Anhand einer schalterspezifischen Kennlinie werden ein ausschaltstromabhängiger Schaltspiel-Wert und ein Schaltspiel-Bezugswert ermittelt. Aus diesen Werten wird ein Restschaltspiel-Wert errechnet.

DE 10 2011 100305 A1 offenbart ein Verfahren zur Bestimmung eines die Abnutzung eines Relais kennzeichnenden Parameters, bei dem ein über das Relais geflossener Strom gemessen wird und der gemessene Strom zu gespeicherten Strombereichen zugeordnet wird.

Es ist daher eine Aufgabe der Erfindung, eine Steuerungsvorrichtung zum Steuern eines, insbesondere mechanischen, Schaltelements zur Verfügung zu stellen, mit der ein Verschleiß des Schaltelements sensorlos einfach und preisgünstig bestimmt werden kann.

Die Aufgabe wird erfindungsgemäß gelöst durch eine Steuerungsvorrichtung zum Steuern eines Schaltelements, vorzugsweise eines mechanischen Relais, mit den Merkmalen des Anspruchs 1.

Hieraus ergibt sich der Vorteil, dass dem Anwender einfach und übersichtlich eine Aussage zum Verschleiß, insbesondere Kontaktverschleiß, und zu den verbleibenden Schaltzyklen des Schaltelements unter der gegebenen Belastung des Schaltelements gegeben werden kann, damit der Anwender auf Grundlage der Information das Schaltelement zum optimalen Zeitpunkt austauschen kann. Insbesondere geben die in Abhängigkeit der eingestellten Belastungsstufe errechneten und erwarteten Schaltzyklen des Schaltelements im Sinne der Erfindung eine mögliche maximale Gesamtzahl an Schaltzyklen des Schaltelements unter der eingestellten Belastungsstufe wieder, wobei die durch die zweite Zahl wiedergegebenen getätigten Schaltzyklen nicht dazu gezählt werden.

Gemäß einem bevorzugten Ausführungsbeispiel ist die Bedieneinheit aus einer Taste, einem Tastenblock oder einem Drehschalter gebildet.

Gemäß einem weiteren bevorzugten Ausführungsbeispiel ist die Belastungsstufe aus einem Laststrom, einer Lastspannung, einer Lastart und/oder einer erwarteten Schaltfrequenz in einer vorgesehenen Applikation des Schaltelements berechenbar.

Gemäß einem weiteren bevorzugten Ausführungsbeispiel ist die einzustellende Belastungsstufe aus Parameterzahlenwerten bestimmbar, die aus einem Diagramm und/oder einer applikationsspezifischen Abfrage in einem Datenblatt für den Anwender entnehmbar sind. Vorteilhafterweise besteht das Diagramm aus einem Strom-Spannungsdiagramm mit gekennzeichneten Verschleißstärken, denen das Schaltelement ausgesetzt ist. Dadurch ergibt sich der Vorteil, dass der Anwender auf einfachste Weise die einzustellende Belastungsstufe des Schaltelements entsprechend der Verschleißstärke des Schaltelements bei der Applikation entnehmen und in der Steuerungsvorrichtung einstellen kann.

Gemäß einem weiteren bevorzugten Ausführungsbeispiel erfragt die applikationsspezifische Abfrage eine induktive Last oder eine Häufigkeit einer bestimmten Schaltfrequenz, von der die Belastungsstufe für das Schaltelement bestimmbar ist.

Gemäß einem weiteren bevorzugten Ausführungsbeispiel ist die Belastungsstufe numerisch in einem Bereich, vorzugsweise von Null bis Sechs, unterteilt, wobei die Belastungsstufe mit einer kleinstmöglichen Zahl, insbesondere Null, einer höchstmöglichen Anzahl an Schaltzyklen und die Belastungsstufe mit einer größtmöglichen Zahl, insbesondere Sechs, einer niedrigsten Anzahl an Schaltzyklen entspricht.

Gemäß einem weiteren bevorzugten Ausführungsbeispiel ist ein Diagnosemodus mittels der Bedieneinheit auswählbar, in dem die noch verbleibende Rest-Lebensdauer des Schaltelements ohne Unterbrechung des Betriebs des Schaltelements anzeigbar ist.

Gemäß einem weiteren bevorzugten Ausführungsbeispiel ist eine Anzeigeeinheit vorgesehen, die die eingestellte Belastungsstufe und die getätigte Schaltzyklen anzeigt. Hierbei zeigt die Anzeigeeinheit vorteilhafterweise die Information der Differenz zwischen dem ersten und zweiten Zahlenwert, insbesondere die noch verbleibende Rest-Lebensdauer des Schaltelements, an. Vorzugsweise zeigt die Anzeigeeinheit die Information des Quotienten aus dem zweiten zu dem ersten Zahlenwert, insbesondere das prozentuale Verhältnis zwischen den bereits getätigten Schaltzyklen zu den erwarteten maximal möglichen Schaltzyklen, an.

Die erfindungsgemäße Steuerungsvorrichtung kann auf ähnliche Weise durch weitere Merkmale ausgestaltet werden und zeigt dabei ähnliche Vorteile. Derartige weitere Merkmale sind beispielhaft, aber nicht abschließend, in den sich an den unabhängigen Anspruch anschließenden Unteransprüchen beschrieben.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnungen zeigen in:
- Fig. 1: eine schematische Darstellung einer erfindungsgemäßen Steuerungsvorrichtung;
- Fig. 2a-2c: eine schematische, beispielhafte Darstellung einer erfindungsgemäßen Bestimmung einer Belastungsstufe des Schaltelements; und
- Fig. 3a-3b: eine schematische, beispielhafte Darstellung einer Anzeige an der erfindungsgemäßen Steuerungsvorrichtung.

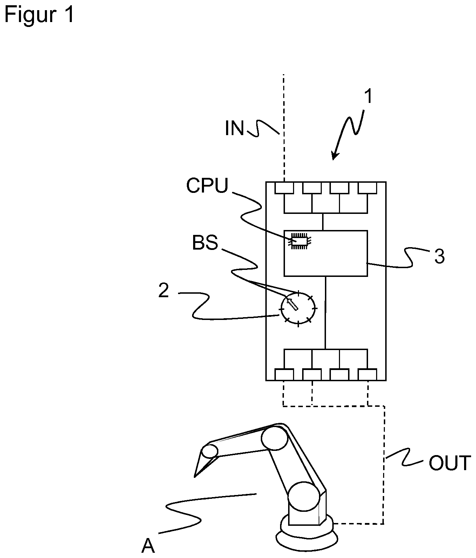

In der Figur 1 ist ein schematischer Aufbau einer erfindungsgemäßen Steuerungsvorrichtung 1 zum Steuern eines Schaltelements, in Form eines mechanischen Relaismoduls, gezeigt, an der beispielhaft ein Aktor A angeschlossen ist, wobei über eine Eingangsleitung IN das Relaismodul 1 mit Eingangssignalen versorgt wird, um über eine Ausgangsleitung OUT den Aktor A ein- oder auszuschalten bzw. einen Lastkreis zu aktivieren oder zu deaktivieren.

Das bevorzugte, dargestellte Relaismodul 1 weist eine Bedieneinheit 2 auf, die zum Einstellen einer Belastungsstufe BS für das Relaismodul 1 vorgesehen ist. Hierbei stellt die Belastungsstufe BS eine Belastung dar, mit der das Relaismodul 1 in seinem Betrieb betrieben bzw. belastet wird. D.h. die Belastung des Relaismoduls 1 ist unter anderem davon abhängig, welche Art von Aktoren A an dem Relaismodul 1 angeschlossen ist, wie hoch ein Laststrom oder eine Lastspannung auf das Relaismodul 1 aufgeschaltet wird, oder wie häufig das Relaismodul 1 zu schalten hat.

Die Bedieneinheit 2 ist in bevorzugter Weise aus einer Taste, einem Tastenblock oder einem Drehschalter gebildet, so dass ein Anwender auf einfachste Art und Weise die Belastungsstufe BS an dem Relaismodul 1 einstellen kann. In dem dargestellten Ausführungsbeispiel besteht die Bedieneinheit 2 vorzugsweise aus einem Drehschalter, an dem die Belastungsstufen BS angezeigt sind, so dass der Anwender nach der Bestimmung der korrekten Belastungsstufe BS der dargestellten Anwendung für die erfindungsgemäße Steuerungsvorrichtung 1 lediglich durch Drehen des Zeigers auf die jeweilige Belastungsstufe BS die Einstellung an der Steuerungsvorrichtung 1 durchführen kann.

Die eingestellte Belastungsstufe BS für das Relaismodul 1 wird vorteilhafterweise ebenfalls in dem nichtflüchtigen Speicher abgespeichert.

Auf Basis der eingestellten Belastungsstufe BS errechnet die Steuereinheit CPU einen ersten Zahlenwert Z1 für erwartete Schaltzyklen des Schaltelements unter der eingestellten Belastungsstufe BS, wobei der erste Zahlenwert Z1 einer erwarteten, insbesondere maximal möglichen Lebensdauer des Schaltelements in Abhängigkeit von der eingestellten Belastungsstufe BS entspricht.

Im Betrieb bestimmt eine Steuereinheit CPU einen zweiten Zahlenwert Z2, der getätigte Schaltzyklen des Schaltelements wiedergibt. Hierbei können die getätigten Schaltzyklen durch die Steuereinheit CPU gezählt und in einem nichtflüchtigen Speicher gespeichert werden, der zu der Steuereinheit CPU der erfindungsgemäßen Steuerungsvorrichtung bzw. des Relaismoduls 1 gehört.

Die Steuereinheit CPU bildet eine Differenz aus dem ersten und zweiten Zahlenwert Z1 und Z2 oder einen Quotienten Z2/Z1 aus dem zweiten zu dem ersten Zahlenwert Z2 und Z1. Eine Information aus der Differenz zwischen dem ersten und zweiten Zahlenwert Z1 und Z2 oder aus dem Quotienten Z2/Z1 aus dem zweiten zu dem ersten Zahlenwert Z2 und Z1 ist während eines Betriebs des Schaltelements für den Anwender entnehmbar.

Die Information der Differenz zwischen dem ersten und zweiten Zahlenwert Z1 und Z2 gibt eine noch verbleibende Rest-Lebensdauer des Schaltelements wieder, die sich aus einem Vergleich zwischen den erwarteten Schaltzyklen bzw. der erwarteten Lebensdauer des Schaltelements und der bereits getätigten Schaltzyklen bzw. dem Verschleiß des Schaltelements ergibt. Die Information des Quotienten Z2/Z1 aus dem zweiten zu dem ersten Zahlenwert Z2 und Z1 gibt wiederum ein prozentuales Verhältnis zwischen den bereits getätigten Schaltzyklen bzw. dem Verschleiß des Schaltelements zu den erwarteten Schaltzyklen des Schaltelements bzw. der maximal möglichen Lebensdauer des Schaltelements wieder.

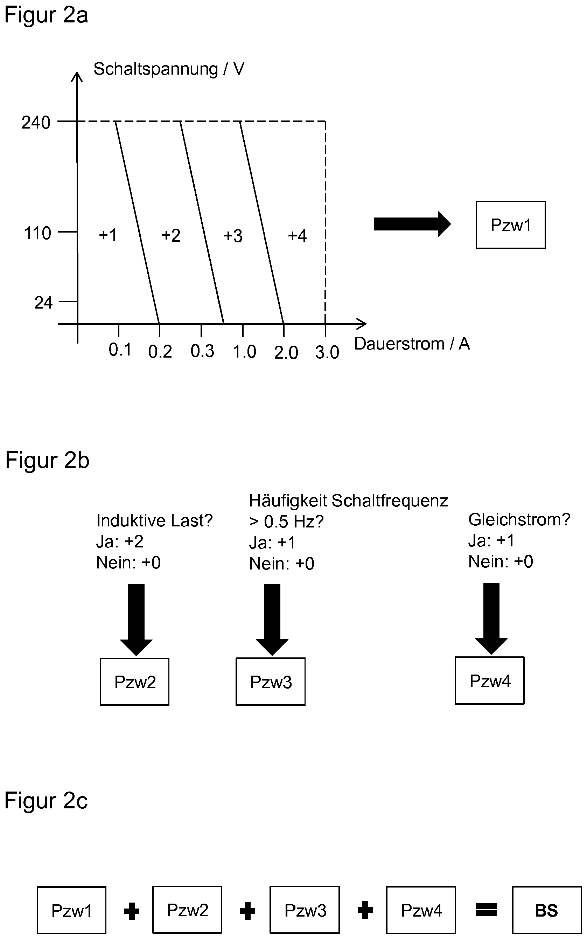

In den Figuren 2a bis 2c ist eine schematische, beispielhafte Darstellung einer erfindungsgemäßen Bestimmung der Belastungsstufe BS des Schaltelements gezeigt, die in die Steuerungsvorrichtung 1 einstellbar ist. Die Belastungsstufe BS ist aus einem Laststrom, einer Lastspannung, einer Lastart und/oder einer erwarteten Schaltfrequenz in einer vorgesehenen Applikation des Schaltelements berechenbar. Die einzustellende Belastungsstufe BS ist aus Parameterzahlenwerten Pzw1 bis Pzw4 bestimmbar, die aus einem Diagramm und/oder einer applikationsspezifischen Abfrage in einem Datenblatt für den Anwender entnehmbar sind.

Nach der Bestimmung der einzustellenden Belastungsstufe BS können wie oben beschrieben die Steuerungsvorrichtung 1 eingestellt und das Schaltelement entsprechend der vorgesehenen Anwendung betrieben werden.

In Figur 2a besteht das gezeigte Diagramm aus einem Strom-Spannungsdiagramm mit gekennzeichneten Verschleißstärken des Schaltelements. Die X-Achse des Diagramms gibt einen Dauerstrom in Ampere wieder, mit dem das Relaismodul 1 belastet wird. Die Y-Achse des Diagramms stellt die Schaltspannung in Volt dar, mit der das Relaismodul 1 geschaltet wird. Die Fläche in dem gestrichelten Viereck der Schaltspannungs- und Dauerstrom-Achse ist somit die Verschleißstärke, der das Schaltelement ausgesetzt ist. Diese Verschleißstärke ist beispielhaft in +1 bis +4 unterteilt. D.h. je größer die Schaltspannung und der Dauerstrom sind, desto größer ist die Verschleißstärke, die auf das Schaltelement wirkt, bzw. desto höher ist die Belastungsstufe BS, die für die erfindungsgemäße Steuerungsvorrichtung bzw. das erfindungsgemäße Relaismodul einzustellen ist.

Bei dem dargestellten Ausführungsbeispiel ist bei +1 ein Verschleiß des Schaltelements am kleinsten und bei +4 ist der Verschleiß des Schaltelements entsprechend am größten.

Aus dem Strom-Spannungsdiagramm kann der Anwender den ersten Parameterzahlenwert Pzw1 entnehmen.

Aus den, in der Figur 2b dargestellten beispielhaften, applikationsspezifischen Abfragen kann der Anwender weitere zu berücksichtigende Parameterzahlenwerte Pzw2 bis Pzw4 für die Bestimmung der Belastungsstufe BS für die Anwendung der erfindungsgemäßen Steuerungsvorrichtung 1 ermitteln.

Die Abfragen können in einem Datenblatt der erfindungsgemäßen Steuerungsvorrichtung 1 hinterlegt sein, so dass der Anwender den passenden Parameterzahlenwert Pzw2 bis Pzw4 ablesen kann, oder an der erfindungsgemäßen Steuerungsvorrichtung 1 angezeigt sein, so dass der Anwender mittels der Bedieneinheit 2 den passenden Parameterzahlenwert Pzw2 bis Pzw4 eingeben kann.

Beim dem Ausführungsbeispiel mit einer Auswahl der Parameterzahlenwerte Pzw2 bis Pzw4 direkt an der erfindungsgemäßen Steuerungsvorrichtung 1 weist die erfindungsgemäße Steuerungsvorrichtung 1 eine Anzeigeeinheit 3 auf, die die applikationsspezifischen Abfragen dem Anwender anzeigt, so dass der Anwender mittels der Bedieneinheit 2 den korrekten Parameterzahlenwert Pzw2 bis Pzw4 zu der jeweiligen applikationsspezifischen Abfrage eingeben kann, um die richtige Belastungsstufe BS zu erhalten.

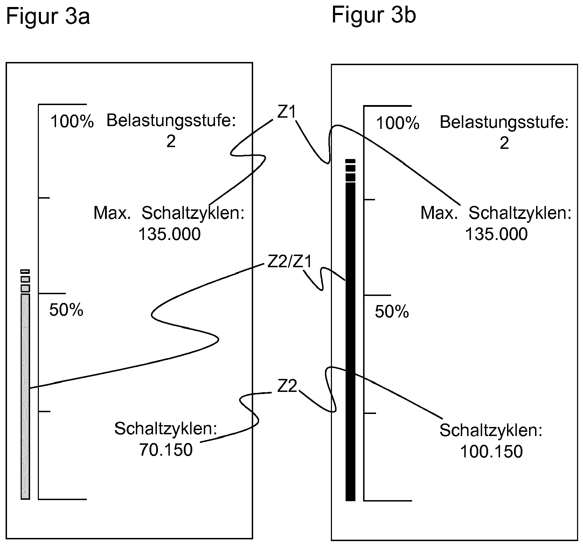

Die Anzeigeeinheit 3 zeigt vorteilhafterweise die eingestellte Belastungsstufe BS, die von der eingestellten Belastungsstufe BS abhängigen maximal möglichen Schaltzyklen und die getätigten Schaltzyklen an. Insbesondere dient die Anzeigeeinheit 3 auch dazu, die Information der Differenz zwischen dem ersten und zweiten Zahlenwert Z1 und Z2, d.h. die noch verbleibende Rest-Lebensdauer des Schaltelements, oder die Information des Quotienten Z2/Z1 aus dem zweiten zu dem ersten Zahlenwert Z2 und Z1, d.h. das prozentuale Verhältnis zwischen dem Verschleiß zu der maximal möglichen Lebensdauer des Schaltelements, anzuzeigen. Mit anderen Worten, der Anwender kann während des Betriebs der erfindungsgemäßen Steuerungsvorrichtung 1 bzw. des Relaismoduls die noch verbleibende Rest-Lebensdauer des Schaltelements ohne eine Unterbrechung des Betriebs des Schaltelements entnehmen, indem der Anwender vorzugsweise ein Diagnosemodus auswählt und die Information aus der Differenz zwischen dem ersten und zweiten Zahlenwert Z1 und Z2 oder, wie in den Figuren 3a und 3b als Balken dargestellt, die Information aus dem Quotienten Z2/Z1 aus dem zweiten zu dem ersten Zahlenwert Z2 und Z1 an der Anzeigeeinheit 3 anzeigen lässt.

Anhand des in der Figur 2b gezeigten Ausführungsbeispiels der applikationsspezifischen Abfrage kann der Anwender die Lastart, nämlich *"Induktive Last?"* bzw. *"Gleichstrom?",* beantworten. Bei einer Ja-Antwort bei der Abfrage bzgl. der induktiven Last wird ein Parameterzahlenwert Pzw2 gleich Zwei (Ja: +2) eingestellt und bei einer Ja-Antwort bei der Abfrage bzgl. des Gleichstroms wird ein Parameterzahlenwert Pzw4 gleich Ein (Ja: +1) eingestellt. Bei einer jeweiligen Nein-Antwort werden die Parameterzahlenwerte Pzw2 und Pzw4 gleich Null (Nein: +0) eingestellt.

Eine weitere applikationsspezifische Abfrage erfragt eine Häufigkeit eines Auftretens einer Schaltfrequenz, mit der die erfindungsgemäße Steuerungsvorrichtung 1 betrieben wird bzw. das Schaltelement geschaltet wird. Hierbei wird festgestellt, ob beispielsweise eine Schaltfrequenz größer als 0.5 Hz häufiger auftritt. Bei einer Ja-Antwort bei der Abfrage bzgl. der Häufigkeit der Schaltfrequenz größer als 0.5 Hz wird ein Parameterzahlenwert Pzw3 gleich Ein (Ja: +1) eingestellt und bei einer Nein-Antwort wird der Parameterzahlenwert Pzw3 gleich Null (Nein: +0) eingestellt.

Mit anderen Worten, die applikationsspezifische Abfrage erfragt eine induktive Last oder eine Häufigkeit einer bestimmten Schaltfrequenz, von der die Belastungsstufe BS für das Schaltelement bestimmbar ist.

Gemäß Figur 2c werden die vom Anwender bestimmten Parameterzahlenwerte Pzw1 bis Pzw4 aufsummiert, woraus die einzustellende Belastungsstufe BS für die erfindungsgemäße Steuerungsvorrichtung 1 bei der entsprechenden Applikation bestimmt ist.

Die auf diese Weise bestimmte applikationsbezogene Belastungsstufe BS kann eingestellt werden, so dass die Steuereinheit CPU die Information betreffend die noch verbleibende Rest-Lebensdauer des Schaltelements errechnet und dem Anwender zur Verfügung stellen kann.

In den Figuren 3a und 3b ist jeweils eine schematische, beispielhafte Darstellung der Anzeigeeinheit 3 an der erfindungsgemäßen Steuerungsvorrichtung 1 gezeigt. Auf der Anzeigeeinheit 3 sind die bereits getätigten Schaltzyklen (*"70150"* bzw. *"100150"*) und die eingestellte Belastungsstufe BS (*"2"*) für den Anwender angezeigt.

Die Belastungsstufe BS ist vorzugsweise numerisch in einem Bereich von 0 bis 6 unterteilt. Hierbei entspricht die Belastungsstufe BS gleich Null (*"0"*) einer höchstmöglichen Anzahl an Schaltzyklen. Die Belastungsstufe BS gleich Sechs (*"6"*) entspricht einer niedrigsten Anzahl an Schaltzyklen. Mit anderen Worten, bei der Belastungsstufe BS gleich Null ist das erfindungsgemäße Relaismodul im Betrieb am wenigsten belastet, wohingegen bei der Belastungsstufe BS gleich Sechs das erfindungsgemäße Relaismodul im Betrieb am höchsten belastet ist.

Neben der dargestellten Belastungsstufe BS und den bereits getätigten Schaltzyklen (70.150 bzw. 100.150) kann der Anwender anhand der angezeigten Information aus der Differenz zwischen den getätigten Schaltzyklen (70.150 bzw. 100.150) des Schaltelements und den erwarteten, von der Belastungsstufe BS abhängigen Schaltzyklen (135.000) des Schaltelements die noch verbleibende Rest-Lebensdauer des Schaltelements oder anhand des angezeigten Balken aus der Information des Quotienten Z2/Z1 aus den getätigten Schaltzyklen (70.150 bzw. 100.150) zu den maximal möglichen Schaltzyklen (135.000) des Schaltelements entnehmen.

Die Information der Anzeige in der Figur 3a gibt dem Anwender an, dass sich das Relaismodul noch in einem guten Zustand befindet, da sich eine abgegoltene Lebensdauer des Schaltelements etwas über die Hälfte der bei der Belastungsstufe BS gleich Zwei erwarteten (maximalen) Lebensdauer des Schaltelements befindet. Hierbei ist es vorteilhaft, dass der dargestellte Balken die Information aus dem Quotienten Z2/Z1 aus dem zweiten zu dem ersten Zahlenwert Z2 und Z1 prozentual anzeigt. Hierdurch kann der Anwender den prozentualen Verschleiß des Schaltelements gegenüber der maximal möglichen Lebensdauer des Schaltelements ablesen. Aus der Information der Anzeige in der Figur 3b hingegen kann der Anwender entnehmen, dass eine Abnutzung des Schaltelements bereits signifikant hoch ist, so dass ein baldiger Austausch des Schaltelements durchgeführt werden sollte.

Somit erhält der Anwender erfindungsgemäß zu jeder Zeit direkt an einer Maschine mit der erfindungsgemäßen Steuerungsvorrichtung 1 einen Überblick über den Verschleiß des Schaltelements und kann zeit- und kostenoptimiert eine Wartung des Relaismoduls durchführen. D.h. bezogen auf die Figur 3a zum Beispiel, dass der Anwender die Information gewinnt, dass wenn das Schaltelement seit einem Jahr bei der Belastungsstufe BS gleich Zwei ("2") betrieben wurde, das Schaltelement bei bis dahin 70.150 getätigtem Schalten noch knapp ein weiteres Jahr betrieben werden kann, da der Verschleiß bei knapp über der Hälfte der erwarteten maximal möglichen Lebensdauer des Schaltelements liegt. Daher kann die Wartung bzw. der Austausch des Schaltelements zeit- und kostenoptimierter geplant werden.

Bei einem bevorzugten Ausführungsbeispiel der erfindungsgemäßen Steuerungsvorrichtung 1 kann der Anwender beispielsweise entsprechend einer Änderung der Applikation die Belastungsstufe BS mittels der Bedieneinheit 2 ändern, so dass die Steuereinheit CPU den ersten Zahlenwert Z1 neu ermitteln kann, der der neu eingestellten Belastungsstufe BS entspricht. Bei der Berechnung des neuen ersten Zahlenwertes Z1 wird die bisherige Information bzgl. des bisherigen Verschleißes des Relaismoduls mitverrechnet. Die neu erhaltene Information aus der Differenz zwischen dem ersten und zweiten Zahlenwert Z1 und Z2 oder die Information aus dem Quotienten Z2/Z1 aus dem zweiten zu dem ersten Zahlenwert Z2 und Z1 gibt den Anwender einerseits an, wie hoch die bereits abgegoltene Lebensdauer bzw. der prozentuale Verschleiß des Schaltelements unter Berücksichtigung der neu eingestellten Belastungsstufe BS ist, und andererseits ob ein weiterer Betrieb des Relaismoduls unter der neuen Belastungsstufe BS wirtschaftlich ist oder ob ein Austausch gleich bzw. zeitnah durchgeführt werden sollte.

Bei der Neuberechnung kann es daher vorteilhafterweise zu dem Ergebnis kommen, dass die Anzeigeeinheit 3 100% als Information angibt. Dies bedeutet, dass sich bei der eingestellten neuen Belastungsstufe BS ein Versagen des Relaismoduls in unmittelbarer Zukunft ergeben würde, so dass es ratsam wäre, das bereits eingesetzte und somit verschleißte Schaltelement nicht unter der neu eingestellten Belastungsstufe BS bzw. entsprechend der neuen Applikation zu betreiben.

Der Anwender erhält die Möglichkeit, einen Ausfall des Schaltelements im Betrieb unter der neuen Applikation von vornherein zu vermeiden, indem er das benutzte Schaltelement gegen ein neues Schaltelement austauscht, das für die neu eingestellte Belastungsstufe BS der neuen Applikation geeigneter ist.

Ferner kann sich insbesondere die Anzeige der Information an der Anzeigeeinheit 3 schneller verändern, wenn es sich bei der neu eingestellten Belastungsstufe BS um eine höhere Belastungsstufe BS handeln sollte.

Im umgekehrten Fall, in dem das Schaltelement von einer verschleißstarken Applikation mit einer großen Belastungsstufe BS auf eine verschleißarme Applikation mit einer kleinen Belastungsstufe BS eingestellt wird, zeigt die erfindungsgemäße Steuerungsvorrichtung 1 einen größeren Abstand zwischen der bereits abgegoltenen Lebensdauer des Schaltelements und der neu erwarteten (maximalen) Lebensdauer des Schaltelements an, so dass ein entsprechender Wartungszeitpunkt zeitlich nach hinten verschoben werden kann.

Hierdurch erhält der Anwender eine höhere Planungssicherheit für die Wartung des Schaltelements.

### Bezugszeichenliste

- 1: Steuerungsvorrichtung
- 2: Bedieneinheit
- 3: Anzeigeeinheit
- A: Aktor
- BS: Belastungsstufe
- CPU: Steuereinheit
- IN: Eingangsleitung
- OUT: Ausgangsleitung
- Pzw1 bis: Parameterzahlenwert
- Pzw4:
- Z1: Erster Zahlenwert
- Z2: Zweiter Zahlenwert

## Patentansprüche

1. Steuerungsvorrichtung (1) zum Steuern eines Schaltelements, vorzugsweise eines mechanischen Relais, mit
einer Bedieneinheit (2) zum Einstellen einer Belastungsstufe (BS), auf der das Schaltelement betreibbar ist, und
einer Steuereinheit (CPU), **dadurch gekennzeichnet, dass** die Steuereinheit (CPU) derart ausgebildet ist, zum Errechnen eines ersten Zahlenwerts (Z1), der auf Basis der eingestellten Belastungsstufe (BS) geschätzte erwartete Schaltzyklen des Schaltelements wiedergibt und einer erwarteten Lebensdauer des Schaltelements in Abhängigkeit von der eingestellten Belastungsstufe (BS) entspricht, und zum Bestimmen eines zweiten Zahlenwerts (Z2), der getätigte Schaltzyklen des Schaltelements wiedergibt, wobei eine Information aus einer Differenz zwischen dem ersten und zweiten Zahlenwert (Z1, Z2) oder aus einem Quotient (Z2/Z1) aus dem zweiten zu dem ersten Zahlenwert (Z2, Z1) während eines Betriebs des Schaltelements für einen Anwender entnehmbar ist, wobei die Information der Differenz eine noch verbleibende Rest-Lebensdauer des Schaltelements wiedergibt oder die Information des Quotienten (Z2/Z1) ein prozentuales Verhältnis zwischen den bereits getätigten Schaltzyklen zu den erwarteten Schaltzyklen des Schaltelements wiedergibt.

2. Steuerungsvorrichtung (1) nach Anspruch 1, **dadurch gekennzeichnet, dass** die Bedieneinheit (2) aus einer Taste, einem Tastenblock oder einem Drehschalter gebildet ist.

3. Steuerungsvorrichtung (1) nach Anspruch 1 oder 2, **dadurch gekennzeichnet, dass** die Belastungsstufe (BS) aus einem Laststrom, einer Lastspannung, einer Lastart und/oder einer erwarteten Schaltfrequenz in einer vorgesehenen Applikation des Schaltelements berechenbar ist.

4. Steuerungsvorrichtung (1) nach einem der vorhergehenden Ansprüche, **dadurch gekennzeichnet, dass** die einzustellende Belastungsstufe (BS) aus Parameterzahlenwerten (Pzw1 - Pzw4) bestimmbar ist, die aus einem Diagramm und/oder einer applikationsspezifischen Abfrage in einem Datenblatt für den Anwender entnehmbar sind.

5. Steuerungsvorrichtung (1) nach Anspruch 4, **dadurch gekennzeichnet, dass** das Diagramm aus einem Strom-Spannungsdiagramm mit gekennzeichneten Verschleißstärken besteht, die dem Schaltelement ausgesetzt sind.

6. Steuerungsvorrichtung (1) nach Anspruch 4 oder 5, **dadurch gekennzeichnet, dass** die applikationsspezifische Abfrage eine induktive Last oder eine Häufigkeit einer bestimmten Schaltfrequenz erfragt, von der die Belastungsstufe (BS) für das Schaltelement bestimmbar ist.

7. Steuerungsvorrichtung (1) nach einem der vorhergehenden Ansprüche, **dadurch gekennzeichnet, dass** die Belastungsstufe (BS) numerisch in einem Bereich, vorzugsweise von Null bis Sechs, unterteilt ist, und wobei die Belastungsstufe (BS) mit einer kleinstmöglichen numerischen Zahl, insbesondere Null, einer höchstmöglichen Anzahl an Schaltzyklen und die Belastungsstufe (BS) mit einer größtmöglichen numerischen Zahl, insbesondere Sechs, einer niedrigsten Anzahl an Schaltzyklen entspricht.

8. Steuerungsvorrichtung (1) nach einem der Ansprüche 1 bis 7, **dadurch gekennzeichnet, dass** ein Diagnosemodus mittels der Bedieneinheit (2) auswählbar ist, in dem die noch verbleibende Rest-Lebensdauer des Schaltelements oder das prozentuale Verhältnis ohne Unterbrechung des Betriebs des Schaltelements anzeigbar ist.

9. Steuerungsvorrichtung (1) nach einem der vorhergehenden Ansprüche, **dadurch gekennzeichnet, dass** eine Anzeigeeinheit (3) vorgesehen ist, die die eingestellte Belastungsstufe (BS) und die getätigte Schaltzyklen anzeigt.

10. Steuerungsvorrichtung (1) nach Anspruch 9, **dadurch gekennzeichnet, dass** die Anzeigeeinheit (3) die Information der Differenz zwischen dem ersten und zweiten Zahlenwert oder die Information des Quotienten (Z2/Z1) aus dem zweiten Zahlenwert zu dem ersten Zahlenwert anzeigt.

## Claims

1. Control device (1) for controlling a switching element, preferably a mechanical relay, with an operating unit (2) for setting a load level (BS) at which the switching element can be operated, and a control unit (CPU), **characterized in that** the control unit (CPU) is adapted to calculate a first numerical value (Z1) representing estimated expected switching cycles of the switching element based on the set load level (BS) and corresponding to an expected service life of the switching element depending on the set load level (BS), and to determine a second numerical value (Z2) representing switching cycles of the switching element, information being obtained from a difference between the first and second numerical value (Z1, Z2) or from a quotient (Z2/Z1) from the second to the first numerical value (Z2, Z1) during operation of the switching element, the information of the difference representing a remaining service life of the switching element or the information of the quotient (Z2/Z1) representing a percentage ratio between the switching cycles already performed and the expected switching cycles of the switching element.

2. Control device (1) according to claim 1, **characterized in that** the control unit (2) is formed from a key, a key block or a rotary switch.

3. Control device (1) according to claim 1 or 2, **characterized in that** the load level (BS) can be calculated from a load current, a load voltage, a load type and/or an expected switching frequency in an intended application of the switching element.

4. Control device (1) according to one of the preceding claims, **characterized in that** the load level (BS) to be set can be determined from parameter number values (Pzw1 - Pzw4) which can be taken from a diagram and/or an application-specific query in a data sheet for the user.

5. Control device (1) according to claim 4, **characterized in that** the diagram consists of a current-voltage diagram with marked wear intensities which are exposed to the switching element.

6. Control device (1) according to claim 4 or 5, **characterized in that** the application-specific query requests an inductive load or an occurence of a specific switching frequency, from which the load level (BS) for the switching element can be determined.

7. Control device (1) according to one of the preceding claims, **characterized in that** the load level (BS) is subdivided numerically in a range, preferably from zero to six, and wherein the load level (BS) with a minimum possible numerical number, in particular zero, corresponds to a maximum possible number of switching cycles and the load level (BS) with a maximum possible numerical number, in particular six, corresponds to a minimum number of switching cycles.

8. Control device (1) according to one of claims 1 to 7, **characterized in that** a diagnostic mode can be selected by means of the control unit (2) in which the remaining service life of the switching element or the percentage ratio can be displayed without interrupting the operation of the switching element.

9. Control device (1) according to one of the preceding claims, **characterized in that** a display unit (3) is provided which indicates the set load level (BS) and the switching cycles carried out.

10. Control device (1) according to claim 9, **characterized in that** the display unit (3) displays the information of the difference between the first and second numerical value or the information of the quotient (Z2/Z1) from the second numerical value to the first numerical value.

## Revendications

1. Dispositif de commande (1) pour commander un élément de commutation, de préférence un relais mécanique, avec une unité de commande (2) pour régler un niveau de charge (BS) auquel l'élément de commutation peut être actionné, et une unité de commande (CPU), **caractérisé en ce que** l'unité de commande (CPU) est adaptée pour calculer une première valeur numérique (Z1) représentant des cycles de commutation escomptés et programmés de l'élément de commutation en fonction du niveau de charge réglé (BS) et correspondant à une durée de vie utile prévue de l'élément de commutation en fonction du niveau de charge réglé (BS), et pour déterminer une deuxième valeur numérique (Z2) représentant des cycles de commutation de l'élément de commutation, des informations étant obtenues à partir d'une différence entre la première et la deuxième valeur numérique (Z1, Z2) ou d'un quotient (Z2/Z1) de la deuxième à la première valeur numérique (Z2, Z1) pendant le fonctionnement de l'élément de commutation, les informations de la différence représentant une durée de vie restante de l'élément de commutation ou les informations du quotient (Z2/Z1) représentant un rapport en pourcentage entre les cycles de commutation déjà formés et les cycles de commutation attendus de l'élément de commutation.

2. Dispositif de commande (1) selon la revendication 1, **caractérisé en ce que** l'unité de commande (2) est formée d'une clé, d'un bloc à clé ou d'un commutateur rotatif.

3. Dispositif de commande (1) selon la revendication 1 ou 2, **caractérisé en ce que** le niveau de charge (BS) peut être calculé à partir d'un courant de charge, d'une tension de charge, d'un type de charge et/ou d'une fréquence de commutation attendue dans une application prévue de l'élément de commutation.

4. Dispositif de commande (1) selon l'une des revendications précédentes, **caractérisé en ce que** le niveau de charge (BS) à régler peut être déterminé à partir de valeurs de numéro de paramètre (Pzw1 - Pzw4) qui peuvent être extraites d'un diagramme et/ou d'une requête spécifique à l'application dans une fiche de données pour l'utilisateur.

5. Dispositif de commande (1) selon la revendication 4, **caractérisé en ce que** le diagramme consiste en un diagramme courant-tension avec des intensités d'usure marquées qui sont exposées à l'élément de commutation.

6. Dispositif de commande (1) selon la revendication 4 ou 5, **caractérisé en ce que** l'interrogation spécifique à l'application demande une charge inductive ou une apparition d'une fréquence de commutation spécifique, à partir de laquelle le niveau de charge (BS) de l'élément de commutation peut être déterminé.

7. Dispositif de commande (1) selon l'une des revendications précédentes, **caractérisé en ce que** le niveau de charge (BS) est subdivisé numériquement dans une plage, de préférence de zéro à six, et dans lequel le niveau de charge (BS) avec un nombre numérique minimal possible, en particulier zéro, correspond à un nombre maximal possible de cycles de commutation et le niveau de charge (BS) avec un nombre numérique maximal possible, en particulier six, correspond à un nombre minimal de cycles de commutation.

8. Dispositif de commande (1) selon l'une des revendications 1 à 7, **caractérisé en ce qu'**un mode diagonal peut être sélectionné au moyen de l'unité de commande (2) dans lequel la durée de vie restante de l'élément de commutation ou le rapport en pourcentage peut être affiché sans interrompre le fonctionnement de l'élément de commutation.

9. Dispositif de commande (1) selon l'une des revendications précédentes, **caractérisé en ce qu'**il est prévu une unité d'affichage (3) qui indique le niveau de charge réglé (BS) et les cycles de commutation effectués.

10. Dispositif de commande (1) selon la revendication 9, **caractérisé en ce que** l'unité d'affichage (3) affiche l'information de la différence entre la première et la deuxième valeur numérique ou l'information du quotient (Z2/Z1) de la deuxième valeur numérique à la première valeur numérique.
